# EUROPEAN PATENT APPLICATION

(11) **EP 3 232 053 A1**
(43) Date of publication of application: **18.10.2017**
(21) Application number: 17166243.0
(22) Date of filing: 12.04.2017
(51) Int. Cl.: F03D 7/02

(54) **WIND TURBINE DRIVE DEVICE AND REDUCTION GEAR**

(30) Priority: 14.04.2016 JP 2016081308
(71) Applicant: Nabtesco Corporation, Tokyo 102-0093 (JP)
(72) Inventor: ASAKAWA, Yuichi, Gifu-ken, Gifu (JP)
(74) Representative: Grünecker Patent- und Rechtsanwälte PartG mbB

(57) **Abstract**

A wind turbine drive device (1A) includes: a motor (M) having a power shaft (35); an input gear (20) that receives motive power transmitted from the power shaft (35) and is rotated by the motive power; a speed reduction unit (30) having a drive shaft (66) rotated by the motive power inputted via the input gear (20); an output shaft (100) rotated by rotary power transmitted from the drive shaft (66); and a clutch mechanism (88) that makes switching between transmission and non-transmission of the rotary power from the drive shaft (66) to the output shaft (100).

## Description

### TECHNICAL FIELD

The present invention relates to a wind turbine drive device and a reduction gear, and in particular, to a wind turbine drive device and a reduction gear having an output shaft that can be rotationally driven according to motive power inputted.

### BACKGROUND ART

A windmill including a nacelle mounted on the top of a tower and a plurality of blades attached to the nacelle is used for wind power generation devices and the like. The nacelle is provided to be rotatable with respect to the tower, and can be turned in accordance with the direction of the wind by rotationally driving the nacelle with respect to the tower by use of a yaw drive device. On the other hand, each blade is set up to be pivotable in a pitch direction with respect to a hub attached to the nacelle, and the pitch angle of a blade can be changed by rotationally driving the shaft part of the blade with respect to the hub by use of a pitch drive device.

For a wind turbine drive device typified by the yaw drive device and the pitch drive device mentioned above, a reduction gear of an eccentric oscillation type disclosed in Japanese patent application publication No. 2014-211204 can be preferably used, for example. In this reduction gear, rotary driving force from a motor is transmitted to a plurality of spur gears via an input gear, and orbital motion of crank shafts and rotation of a carrier are conducted via an oscillating mechanism including the crank shafts, an external gear and pin internal teeth. According to the rotation of the carrier, an output shaft spline-coupled to the carrier is rotated and high torque can be obtained via a pinion attached to the output shaft.

### SUMMARY OF INVENTION

### TECHNICAL PROBLEM

A windmill set up in the natural environment may receive an unexpected wind and strong external force beyond expectations. When the windmill receives such strong external force beyond expectations, excessive force can act locally on a movable part of the windmill, and there are cases where a component is broken at "connection parts between the blades and the hub" or a "connection part between the nacelle and the tower," for example. In particular, in these connection parts, an engaging member such as a ring gear is engaged with a pinion provided on the output shaft of the wind turbine drive device performing the pitch driving and the yaw driving; however, the output shaft of the wind turbine drive device cannot rotate freely since the output shaft is connected to the reduction gear. Accordingly, the pinion and the engaging member fall into a state of being locked together, and when strong external force works on the movable part of the windmill, strong force is likely to act on the wind turbine drive device and the engaging member and thus cause the breakage.

Further, even when external force within an extent not causing the breakage works on the movable part of the windmill, if the wind turbine drive device is operated under such a condition, a load higher than normal is applied to the movable part, and thus the wind turbine drive device and the engaging member are still likely to break. Furthermore, the movable part of the windmill is generally equipped with a plurality of wind turbine drive devices in order to secure sufficient torque. Thus, there are cases where one of the wind turbine drive devices is locked due to failure, and if another wind turbine drive device operates under such a condition, strong force may be applied between the pinion and the engaging member of any of the wind turbine drive devices and may cause the breakage.

When such components like the pinion and the engaging member are broken, replacement of the broken components or replacement of the wind turbine drive device itself becomes necessary. Such part replacement requires great expense and the operation of the windmill has to be stopped until the part replacement is completed. In particular, the ring gear arranged in the connection part between the nacelle and the tower and engaging with the wind turbine drive device is a component that is large-sized and relatively expensive, and thus replacement work of such a ring gear is not only extremely troublesome but also requires a lot of expense.

Accordingly, there is a demand for a mechanism capable of reducing the force applied to the components and preventing failure such as breakage even when the wind turbine drive device receives excessive force beyond expectations.

The present invention has been contrived in light of the above-mentioned circumstances, and an object thereof is to provide a wind turbine drive device and a reduction gear capable of reducing the force applied to a component and preventing failure even when receiving excessive force.

### SOLUTION TO PROBLEM

One aspect of the present invention is directed to a wind turbine drive device comprising: a motor having a power shaft; an input gear that receives motive power transmitted from the power shaft and is rotated by the motive power; a speed reduction unit having a drive shaft rotated by the motive power inputted via the input gear; an output shaft rotated by rotary power transmitted from the drive shaft; and a clutch mechanism that makes switching between transmission and non-transmission of the rotary power from the drive shaft to the output shaft.

According to this aspect, even when excessive force is received, the force applied to the output shaft can be reduced and the failure can be avoided by switching the state of the rotary power from the drive shaft to the output shaft into the non-transmission state with the clutch mechanism.

The clutch mechanism may include: a clutch operating part provided between the drive shaft and the output shaft; and a clutch control unit that controls the clutch operating part.

The clutch operating part may include: a first friction plate attached to the drive shaft; and a second friction plate attached to the output shaft, and the clutch control unit causes the first friction plate and the second friction plate to engage with each other to implement the transmission of the rotary power from the drive shaft to the output shaft, and releases engagement between the first friction plate and the second friction plate to implement the non-transmission of the rotary power from the drive shaft to the output shaft.

The clutch control unit may include: a clutch driver being to be placed in contact with at least one of the first friction plate and the second friction plate; and a clutch switching unit that controls movement of the clutch driver to make switching between engagement and disengagement of the first friction plate and the second friction plate.

The clutch driver may include a hydraulic piston, and the clutch switching unit may control movement of the hydraulic piston via a liquid transmission medium to make the switching between engagement and disengagement of the first friction plate and the second friction plate.

The clutch control unit may further include a clutch hydraulic source connected to the clutch driver via a hydraulic supply line filled with the liquid transmission medium, and the clutch switching unit may include a pressure regulating valve provided with the hydraulic supply line between the clutch driver and the clutch hydraulic source and regulating pressure of the liquid transmission medium on the clutch driver.

The clutch hydraulic source may include an accumulator.

The clutch hydraulic source may further include: a supply port capable of supplying the liquid transmission medium to the hydraulic supply line; and a check valve provided between the supply port and the accumulator and preventing the liquid transmission medium in the hydraulic supply line from flowing out from the supply port.

The speed reduction unit may further include: a case having internal teeth that are provided on an inner circumference side; an external gear having external teeth engaging with the internal teeth; a crank shaft oscillating the external gear according to rotation of the input gear; and a carrier that rotates according to oscillation of the external gear and is connected to the drive shaft.

Another aspect of the present invention is directed to a reduction gear comprising: an input gear that receives motive power transmitted from a power shaft and is rotated by the motive power; a case having internal teeth that are provided on an inner circumferential side; an external gear having external teeth engaging with the internal teeth; a crank shaft oscillating the external gear according to rotation of the input gear; a carrier rotating according to oscillation of the external gear; a drive shaft connected to the carrier and rotating according to rotation of the carrier; an output shaft rotated by rotary power transmitted from the drive shaft; and a clutch mechanism that makes switching between transmission and non-transmission of the rotary power from the drive shaft to the output shaft.

### ADVANTAGEOUS EFFECTS OF INVENTION

According to the present invention, it is possible to make the switching between transmission and non-transmission of the rotary power from the drive shaft to the output shaft by use of the clutch mechanism. Therefore, even when the wind turbine drive device receives excessive force, failure can be prevented by switching the state of the transmission of the rotary power from the drive shaft to the output shaft, to the non-transmission state with the clutch mechanism.

### BRIEF DESCRIPTION OF DRAWINGS

Fig. 1 is a schematic cross-sectional view showing an example of a wind turbine according to an embodiment of the present invention;
Fig. 2 is a functional block diagram showing the general outline of an example of the configuration of a wind turbine drive device;
Fig. 3 is a functional block diagram showing the general outline of an example of the configuration of a reduction gear;
Fig. 4 is a functional block diagram showing the general outline of an example of the configuration of a clutch mechanism;
Fig. 5 is a cross-sectional view showing an example of the configuration of the wind turbine drive device;
Fig. 6 is a partially enlarged view of the wind turbine drive device, and in particular, illustrates a part where the wind turbine drive device is fixed to a rotary mount;
Fig. 7 is a side view of a clutch switching unit, a clutch hydraulic source, etc. illustrated in Fig. 5 viewed in the direction of the arrow S in Fig. 5; and
Fig. 8 is a diagram showing an example of the functional configuration of the clutch mechanism (clutch operating parts and a clutch control unit).

### DESCRIPTION OF EMBODIMENTS

An embodiment of the present invention will be described below with reference to drawings.

In the following embodiment, an example of using a wind turbine drive device as a "yaw drive device for rotationally driving a nacelle (movable part) with respect to a tower (base part)" will be described. However, the configuration of the wind turbine drive device described below is generally applicable to various drive devices for rotationally driving a movable part of a wind turbine with respect to a base part. Thus, the wind turbine drive device described below may also be used as a "pitch drive device for rotationally driving a blade (movable part) in a pitch direction with respect to a hub (base part)," for example.

### [Wind turbine]

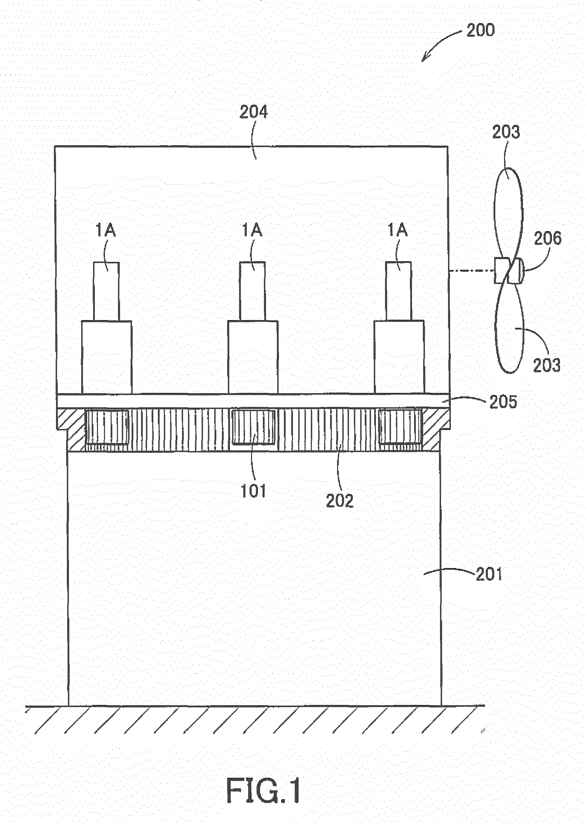

Fig. 1 is a schematic cross-sectional view showing an example of a wind turbine 200 according to an embodiment of the present invention. The wind turbine 200 in this example includes a tower 201, a nacelle 204 rotatably supported by the tower 201, and a plurality of blades 203 attached to the nacelle 204 via a hub 206.

The tower 201 is the base part mounted on the ground. A ring gear 202 of the internal gear type, formed as a rotary drive gear, is fixedly attached to the inner side of the tower 201. The nacelle 204 is provided with a rotary mount 205 and a plurality of wind turbine drive devices 1A, the rotary mount 205 is fixedly attached to the nacelle 204, and the plurality of wind turbine drive devices 1A are attached to the rotary mount 205. Each wind turbine drive device 1A includes a pinion 101 protruding from a hole formed in the rotary mount 205 and engaging with the ring gear 202. The wind turbine drive devices 1A are positioned inside the nacelle 204 so that the pinions 101 are arranged at a plurality of positions along the inner circumferential direction of the ring gear 202. Thus, motors of the wind turbine drive devices 1A rotate their power shafts in sync with each other and thereby rotationally drive the pinions 101 of the wind turbine drive devices 1A, and thereby the entire nacelle 204 together with the rotary mount 205 is rotationally driven (i.e., driven and turned) with respect to the tower 201. By this operation, the direction of the blades 203 and the hub 206 attached to the nacelle 204 is changed. Incidentally, the rotary synchronization of the power shafts among the motors of the wind turbine drive devices 1A may be implemented by, for example, connecting a controller to the wind turbine drive devices 1A and controlling each motor with the controller. Further, a power transmission shaft connected to the hub 206, a speed-increasing gear, a power generator, a converter, etc. are provided with the nacelle 204.

The hub 206 is attached to the nacelle 204 so as to be rotatable with respect to the nacelle 204. A plurality of blades 203 are attached to the hub 206 via shaft parts. These blades 203 are arranged so that the angle between adjacent blades 203 is uniform. Each blade 203 is provided to be rotatable in the pitch direction around the shaft part with respect to the hub 206, and is rotationally driven by a pitch drive device in such a manner that the pitch angle is changed when necessary. While illustration of the pitch drive device is omitted in this example, the configuration of the pitch drive device is not particularly limited; it is also possible, for example, to rotationally drive each blade 203 by use of a pitch drive device having a configuration similar to the wind turbine drive device 1A described below.

### [Wind turbine drive device]

First, the general outline of the configuration of a wind turbine drive device 1A according to this embodiment will be described.

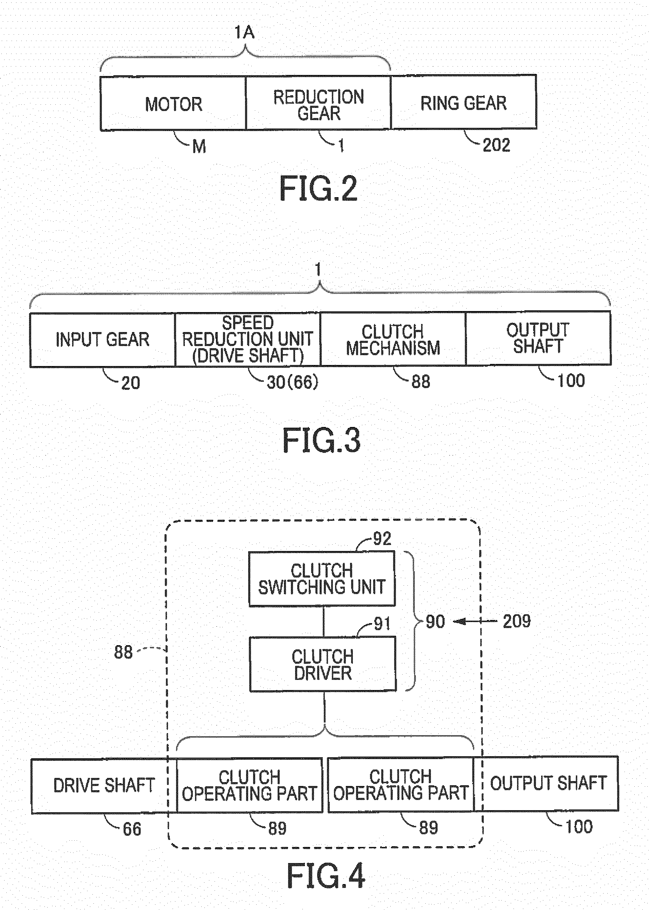

Fig. 2 is a functional block diagram showing the general outline of an example of the configuration of a wind turbine drive device 1A. The wind turbine drive device 1A in this example includes a motor M and a reduction gear 1. The rotary power supplied from the motor M to the reduction gear 1 undergoes the speed reduction by the reduction gear 1 so as to have increased torque, and then is transmitted to the ring gear 202 and transformed into yaw driving force.

Fig. 3 is a functional block diagram showing the general outline of an example of the configuration of the reduction gear 1. The reduction gear 1 in this example includes: an input gear 20 rotated by the power transmitted from the power shaft of the motor M; a speed reduction unit 30 connected to the input gear 20; an output shaft 100 to which the aforementioned pinion 101 is attached; and a clutch mechanism 88 provided between the speed reduction unit 30 and the output shaft 100. The speed reduction unit 30 has a drive shaft 66 that is rotated by the power inputted from the power shaft via the input gear 20. The output shaft 100 is coupled to the drive shaft 66 of the speed reduction unit 30 via the clutch mechanism 88 and is rotated by the rotary power transmitted from the drive shaft 66. The clutch mechanism 88 makes switching between transmission and non-transmission of the rotary power from the drive shaft 66 of the speed reduction unit 30 to the output shaft 100.

Fig. 4 is a functional block diagram showing the general outline of an example of the configuration of the clutch mechanism 88. The clutch mechanism 88 in this example includes: a pair of clutch operating parts 89 (clutch mechanism 88) provided between the drive shaft 66 of the speed reduction unit 30 and the output shaft 100; and a clutch control unit 90 that controls the pair of clutch operating parts 89. The clutch operating parts 89 are attached to the drive shaft 66 and the output shaft 100 respectively. The clutch control unit 90 makes switching between an engaged state (fixed state) and a disengaged state (unfixed state) of the clutch operating part 89 attached to the drive shaft 66 and the clutch operating part 89 attached to the output shaft 100. The clutch control unit 90 in this example includes: a clutch driver 91 being to be placed in contact with at least one of the clutch operating part 89 attached to the drive shaft 66 and the clutch operating part 89 attached to the output shaft 100; and a clutch switching unit 92 that controls movement of the clutch driver 91 and thereby makes the switching between the engagement and disengagement of the pair of clutch operating parts 89. A sensor device 209 for detecting external force acting on the wind turbine drive device 1A is connected to the clutch control unit 90, and a detection signal corresponding to the magnitude of the external force acting on the wind turbine drive device 1A is sent from the sensor device 209 to the clutch control unit 90.

When the above-described wind turbine drive device 1A having the functional configuration shown in Figs. 2 to 4 receives excessive external force beyond expectations, a detection signal is sent from the sensor device 209 to the clutch control unit 90. When receiving the detection signal, indicating the reception of such excessive external force, from the sensor device 209, the clutch control unit 90 (i.e., the clutch switching unit 92 and the clutch driver 91) disengages the clutch between the pair of clutch operating parts 89. In other words, the pair of clutch operating parts 89 is switched to the disengaged state and the drive shaft 66 and the output shaft 100 are switched to a decoupled state. Accordingly, the magnitude of the force transmitted from the drive shaft 66 to the output shaft 100 is reduced and failure such as breakage of the output shaft 100, the pinion 101, the ring gear 202 or the like can be prevented.

Next, a typical example of the wind turbine drive device 1A having the above-described functional configuration will be described. In the following example, the present invention is applied to a wind turbine drive device 1A including a speed reduction unit of the so-called eccentric oscillation type.

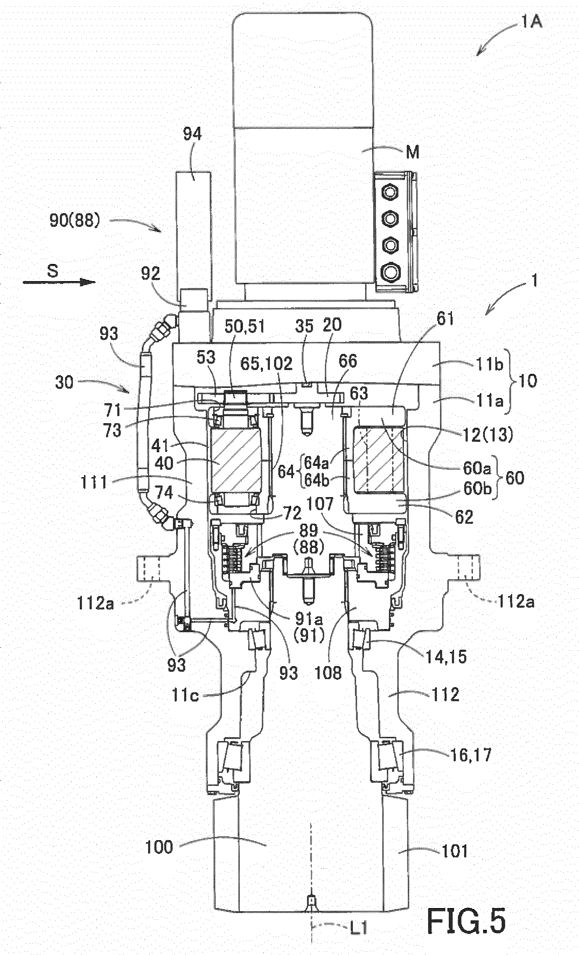

Fig. 5 is a cross-sectional view showing an example of the configuration of the wind turbine drive device 1A. The wind turbine drive device 1A in this example includes: the motor M having the power shaft 35; and the reduction gear 1 which is connected to each of the power shaft 35 and the pinion 101 and transmits power from the power shaft 35 to the pinion 101. The wind turbine drive device 1A is firmly fixed to the rotary mount 205 which is provided with the nacelle 204 of the wind turbine 200 (see Fig. 1) as explained earlier.

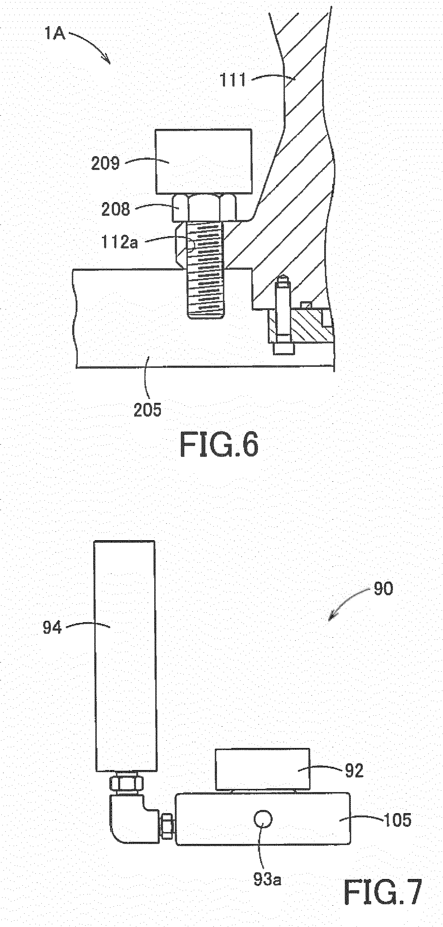

Fig. 6 is a partially enlarged view of the wind turbine drive device 1A, and in particular, illustrates a part where the wind turbine drive device 1A is fixed to the rotary mount 205. In this example, a fastening bolt 208 is inserted into each of a plurality of bolt holes 112a formed in an input-side part 111 of a main case part 11a of the wind turbine drive device 1A. The wind turbine drive device 1A is fixed to the rotary mount 205 with the fastening bolts 208. The sensor device 209 is attached to at least one of the fastening bolts 208, force acting on the fastening bolt 208 is detected by the sensor device 209, and the detection signal is sent from the sensor device 209 to the clutch control unit 90 (see Fig. 4).

For example, when a gust of wind blows against the wind turbine 200 shown in Fig. 1 and excessive external force is suddenly applied to the wind turbine 200, the nacelle 204 rotates. In this case, since the pinion 101 attached to the output shaft 100 of the wind turbine drive device 1A is engaged with the ring gear 202, the wind turbine drive device 1A may be inclined on the rotary mount 205, and force corresponding to the inclination of the wind turbine drive device 1A acts on the fastening bolt 208 in the axial direction.

The sensor device 209 attached to the fastening bolt 208 in this example detects such force in the axial direction acting on the fastening bolt 208. The inclination of the wind turbine drive device 1A on the rotary mount 205, as well as the external force applied to the wind turbine drive device 1A, can be judged based on the force in the axial direction acting on the fastening bolt 208. In this embodiment, the clutch control unit 90 monitors and judges the magnitude and variation of the force acting on the fastening bolt 208 based on the detection signal from the sensor device 209. Then, the clutch control unit 90 controls the clutch operating parts 89 based on the detection signal from the sensor device 209. For example, when the force acting on the fastening bolt 208 is judged to be weaker than or equal to prescribed magnitude, the clutch control unit 90 maintains the clutched state of the clutch operating parts 89 and leaves the drive shaft 66 and the output shaft 100 coupled together. In contrast, when it is judged that force stronger than the prescribed magnitude is acting on the fastening bolt 208, the clutch control unit 90 declutches the clutch operating parts 89 and releases the coupling between the drive shaft 66 and the output shaft 100.

### [Reduction Gear]

The reduction gear 1 shown in Fig. 5 includes: the input gear 20 connected to the power shaft 35 of the motor M; a plurality of spur gears 53 engaging with the input gear 20; the speed reduction unit 30 of the eccentric oscillation type having a plurality of crank shafts 50 fixed to the plurality of spur gears 53 respectively; the drive shaft 66 whose one end is connected to the speed reduction unit 30 and to whose other end the clutch operating parts 89 are attached; and the output shaft 100 whose one end is coupled to the drive shaft 66 via the clutch operating parts 89.

The speed reduction unit 30 includes: a case 10 having internal teeth 12 on its inner circumferential side (inner circumferential surface); an external gear 40 having external teeth 41 engaging with the internal teeth 12 of the case 10; a carrier 60 holding the external gear 40; and the output shaft 100 coupled to the carrier 60 via the clutch operating parts 89 and the drive shaft 66 while also being connected to the pinion 101. The case 10 is formed in a tubular shape and accommodates thereinside the input gear 20, the plurality of spur gears 53, the plurality of crank shafts 50, the external gear 40 and the carrier 60. The external gear 40 rotatably holds the plurality of crank shafts 50 via external gear shaft bearings (not shown) and functions as an oscillating gear oscillated by the plurality of crank shafts 50 according to the rotation of the input gear 20 and the plurality of spur gears 53. The carrier 60 rotatably holds each crank shaft 50 while also holding the external gear 40 via the crank shafts 50.

In the reduction gear 1 having the above-described configuration, the rotary power inputted from the motor M to the input gear 20 undergoes the revolution speed reduction by the speed reduction unit 30 and is outputted from the output shaft 100. The other end of the output shaft 100 protruding from the case 10 is provided with the pinion 101. The pinion 101 is arranged to engage with the ring gear 202 (see Fig. 1). Therefore, the rotary power transmitted to the output shaft 100 via the input gear 20 and the speed reduction unit 30 is outputted to the pinion 101 and the ring gear 202 as yaw driving force in a state with increased torque.

The reference character "L1" in Fig. 5 indicates the central axis of the output shaft 100. The central axis of the inner circumferential surface of the case 10 where the internal teeth 12 is provided is situated on the same axis as the central axis L1. In the following description, a direction simply referred to as an "axial direction" means a direction extending on the central axis L1 or a direction in parallel with the central axis L1. Further, a direction orthogonal to the central axis L1 will be referred to as a "radial direction", and a direction around the central axis L1 will be referred to as a "circumferential direction."

The case 10 includes: the main case part 11a formed in a tubular shape with both ends open; and a sub-case part 11b fixed to one end of the main case part 11a. In this example, the main case part 11a and the sub-case part 11b are connected together by fixing an edge part of the main case part 11a and an edge part of the sub-case part 11b to each other with bolts (not shown). The output shaft 100 protrudes from the other end of the main case part 11a opposite to the one end to which the sub-case part 11b is attached. An annular wall part 11c projecting inward in the radial direction is formed on the inner circumferential surface of an intermediate part of the main case part 11a between the one end and the other end.

The main case part 11a includes: the input-side part 111 situated on the side of the one end, that is, on the side of the sub-case part 11b, with reference to the annular wall part 11c; and an output-side part 112 situated on the side of the other end, that is, on the side of protrusion of the output shaft 100, with reference to the annular wall part 11c. The input-side part 111 accommodates the speed reduction unit 30, and the aforementioned internal teeth 12 are provided on the inner circumferential surface of the input-side part 111. Further, the clutch operating parts 89 are arranged in the input-side part 111 in such a manner that the coupled state and the decoupled state between the drive shaft 66 and the output shaft 100 are controlled by the clutch operating parts 89.

The internal teeth 12 are formed of a plurality of inner tooth pins each formed like a pin. These inner tooth pins are fitted into a plurality of pin grooves 13 formed at even intervals in the circumferential direction across the entire circumference of the inner circumferential surface of the input-side part 111 of the main case part 11a, and are arranged so that the longitudinal direction of each inner tooth pin is in parallel with the central axis L1. The internal teeth 12 configured as above are arranged to engage with the aforementioned external teeth 41 of the external gear 40.

A first bearing accommodation groove 14 in an annular shape is formed in the annular wall part 11c of the main case part 11a. Into the first bearing accommodation groove 14, a first shaft bearing 15 formed of a conical roller bearing or the like is inserted. An outer ring of the first shaft bearing 15 is placed in contact with or close to the bottom surface of the first bearing accommodation groove 14 in regard to the axial direction and is placed in contact with or close to the side surface of the first bearing accommodation groove 14 in regard to the radial direction. In this way, the first shaft bearing 15 is attached to the first bearing accommodation groove 14.

Further, a second bearing accommodation groove 16 in an annular shape is formed at the other end (outer end) of the output-side part 112. Into the second bearing accommodation groove 16, a second shaft bearing 17 formed of a conical roller bearing or the like is inserted. The outer ring of the second shaft bearing 17 is placed in contact with or close to the bottom surface of the second bearing accommodation groove 16 in regard to the axial direction and is placed in contact with or close to a side surface of the second bearing accommodation groove 16 in regard to the radial direction. In this way, the second shaft bearing 17 is attached to the second bearing accommodation groove 16.

The output shaft 100 is arranged on the inner circumferential side of the inner ring of the first shaft bearing 15 and the inner circumferential side of the inner ring of the second shaft bearing 17 and is held to be rotatable with respect to the case 10. The output shaft 100 protrudes from the first shaft bearing 15 towards the input-side part 111 of the main case part 11a, and the part of the output shaft 100 protruding towards the input-side part 111 is coupled to the speed reduction unit 30 via the clutch operating parts 89 and the drive shaft 66. In this example, a drive shaft-side spline part 102 is formed on the outer circumferential surface of the part of the drive shaft 66 protruding towards the input-side part 111, and the drive shaft-side spline part 102 is fitted into a carrier-side spline part 65 formed in the carrier 60 of the speed reduction unit 30, by which the drive shaft 66 and the speed reduction unit 30 are connected to each other.

The motor M is attached to the sub-case part 11b of the case 10. The power shaft 35 of the motor M extends towards the inside of the sub-case part 11b and is fixedly connected to the input gear 20 arranged in the sub-case part 11b. The rotary power generated by the motor M is transmitted to the input gear 20 via the power shaft 35.

The input gear 20 has spur gear structure. The central axis of the power shaft 35 of the motor M and the central axis of the input gear 20 are situated on the central axis L1 of the output shaft 100. The input gear 20 is arranged to engage with each of the plurality of spur gears 53, and the rotary power transmitted from the power shaft 35 to the input gear 20 is transmitted to the plurality of crank shafts 50 respectively fixed to the plurality of spur gears 53.

The carrier 60 included in the speed reduction unit 30 has: a first holding part 61 rotatably holding one end (an end part on the side where the input gear 20 and spur gear 53 are situated) of a crank shaft 50; a second holding part 62 rotatably holding the other end (an end part on the side where the output shaft 100 protrudes) of each crank shaft 50; supports 63 connecting the first holding part 61 to the second holding part 62; and a connection tube part 64 for connecting the carrier 60 to the drive shaft 66. Incidentally, a support 63 is indicated by two-dot chain lines in Fig. 5, for convenience.

Each of the first holding part 61 and the second holding part 62 is formed in a ring shape. The first holding part 61 and the second holding part 62 are arranged to face each other at positions separate in regard to the axial direction. The supports 63 are arranged to extend between a substantially central region of the first holding part 61 in the radial direction and a substantially central region of the second holding part 62 in the radial direction, and connects the first holding part 61 to the second holding part 62. The connection tube part 64 is arranged to extend between the inner circumferential edge of the first holding part 61 and the inner circumferential edge of the second holding part 62, has a cylindrical shape, and has the carrier-side spline part 65 formed on its inner circumferential surface. As mentioned earlier, the drive shaft 66 and the speed reduction unit 30 are connected to each other by fitting the drive shaft-side spline part 102 of the drive shaft 66 into the carrier-side spline part 65.

First end through holes 71 are formed through the first holding part 61, and one end of each crank shaft 50 is rotatably held by a first end through hole 71 via a first crank shaft bearing 73. Second end through holes 72 are formed through the second holding part 62, and the other end of each crank shaft 50 is rotatably held by a second end through hole 72 via a second crank shaft bearing 74.

The carrier 60 in this example is divided into two parts in the axial direction and is formed of a first half body 60a arranged on the side of the sub-case part 11b and a second half body 60b arranged on the side of protrusion of the output shaft 100. The first half body 60a includes the aforementioned first holding part 61, first support half parts constituting part of the supports 63, and a first tube half part 64a constituting a part of the connection tube part 64. On the other hand, the second half body 60b includes the aforementioned second holding part 62, second support half parts constituting a part of the supports 63, and a second tube half part 64b constituting a part of the connection tube part 64.

Bolts (not shown) are inserted into the first support half part and the second support half part to straddle and connect together the first and second support half parts, by which the first half body 60a and the second half body 60b are connected together. On the inner circumferential surfaces of the first tube half part 64a and the second tube half part 64b, the aforementioned carrier-side spline part 65 is formed to straddle the first tube half part 64a and the second tube half part 64b.

Each crank shaft 50 includes a shaft body 51 and an eccentric body (not shown) provided with the shaft body 51. A spur gear 53 is attached to one end of the shaft body 51. Specifically, one end of the shaft body 51 protrudes from the first end through hole 71 towards the sub-case part 11b, and a spur gear 53 is fixed to the one end of the shaft body 51 protruding from the first end through hole 71. The part of the shaft body 51 on the side of the one end arranged between the spur gear 53 and the external gear 40, is rotatably held by the first end through hole 71 via the first crank shaft bearing 73, while the other end of the shaft body 51 is rotatably held by the second end through hole 72 via the second crank shaft bearing 74.

In the state in which a crank shaft 50 is held by the carrier 60, the eccentric body of the crank shaft 50 is arranged between the first holding part 61 and the second holding part 62 of the carrier 60. On the other hand, the external gear 40 arranged between the first holding part 61 and the second holding part 62 is provided with crank shaft through holes (not shown) formed in parallel with the axial direction to allow through the crank shafts 50, in addition to support through holes (not shown) for allowing through the aforementioned supports 63 of the carrier 60. The eccentric bodies of the crank shafts 50 are arranged in the crank shaft through holes of the external gear 40 via crank shaft bearings (not shown).

The external teeth 41 of the external gear 40 are provided so that the number of the external teeth 41 is smaller than the number of the internal teeth 12 on the inner circumference of the case 10 by one or more. Thus, the engagement between the external teeth 41 and the internal teeth 12 shifts along with the rotation of the crank shafts 50, and the external gear 40 carries out eccentric motion (crank motion) and oscillatory rotation.

In the reduction gear 1 having the above-described configuration, when the input gear 20 is rotated by the rotary power transmitted from the power shaft 35 of the motor M, each spur gear 53 engaged with the input gear 20 rotates and each crank shaft 50 rotates. Due to the rotation of each crank shaft 50, the external gear 40 carries out eccentric rotation while oscillating so as to gradually shift the engagement with the internal teeth 12. Along with the eccentric rotation of the external gear 40, each crank shaft 50 performs the orbital motion around the central axis L1 while rotating on its own axis. Due to such orbital motion of the crank shafts 50 according to the oscillatory and eccentric rotation of the external gear 40, the carrier 60 holding the crank shafts 50 rotates. According to the rotation of the carrier 60, the drive shaft 66 spline-coupled to the carrier 60 rotates. As above, the rotary power is transmitted from the power shaft 35 of the motor M to the drive shaft 66, and further, the rotary power of the drive shaft 66 is transmitted to the output shaft 100 via the clutch mechanism 88. Then, torque is transmitted from the pinion 101 provided on the output shaft 100 to the ring gear 202, by which the direction of the blades 203 and the nacelle 204 having the rotary mount 205 is changed.

### [Clutch Mechanism]

Next, a specific example of the configuration of the clutch mechanism 88 will be described below. As explained earlier, the clutch mechanism 88 includes the clutch operating parts 89 and the clutch control unit 90, and the clutch control unit 90 is capable of driving and controlling the clutch operating parts 89 by using any type of motive power, such as motive power of the air pressure type or motive power of the hydraulic pressure type. In the wind turbine drive device 1A shown in Fig. 5, for example, the clutch operating parts 89 are driven and controlled by using motive power of the hydraulic pressure type. In the example shown in Fig. 5, a clutch hydraulic source 94, the clutch switching unit 92, etc. are installed on the upper part of the sub-case part 11b, and the clutch hydraulic source 94 and the clutch switching unit 92 are connected to the clutch driver 91 (hydraulic piston 91a) by a hydraulic supply line 93 filled with a liquid transmission medium such as oil. The clutch driver 91 is provided to be movable in the axial direction when pressed by the liquid transmission medium, and the contacting condition (pressing condition) of the clutch driver 91 on the clutch operating parts 89 changes depending on the axial direction position of the clutch driver 91. The clutch switching unit 92, capable of changing the pressing force of the clutch driver 91 on the clutch operating parts 89 by adjusting the pressure of the liquid transmission medium in the hydraulic supply line 93 (especially, between the clutch switching unit 92 and the clutch driver 91), controls the ON/OFF of the clutch of the clutch operating parts 89.

Fig. 7 is a side view of the clutch switching unit 92, the clutch hydraulic source 94, etc. shown in Fig. 5 viewed in the direction of the arrow S in Fig. 5. Illustration of the hydraulic supply line 93 is omitted in Fig. 7 to facilitate understanding. The clutch control unit 90 in this example includes a hydraulic source body 105, the clutch switching unit 92 attached to the hydraulic source body 105, and the clutch hydraulic source 94 attached to the hydraulic source body 105. The hydraulic supply line 93 extends also to the inside of the hydraulic source body 105 via a supply tube connection part 93a provided on the hydraulic source body 105, and is connected also to each of the clutch hydraulic source 94 and the clutch switching unit 92.

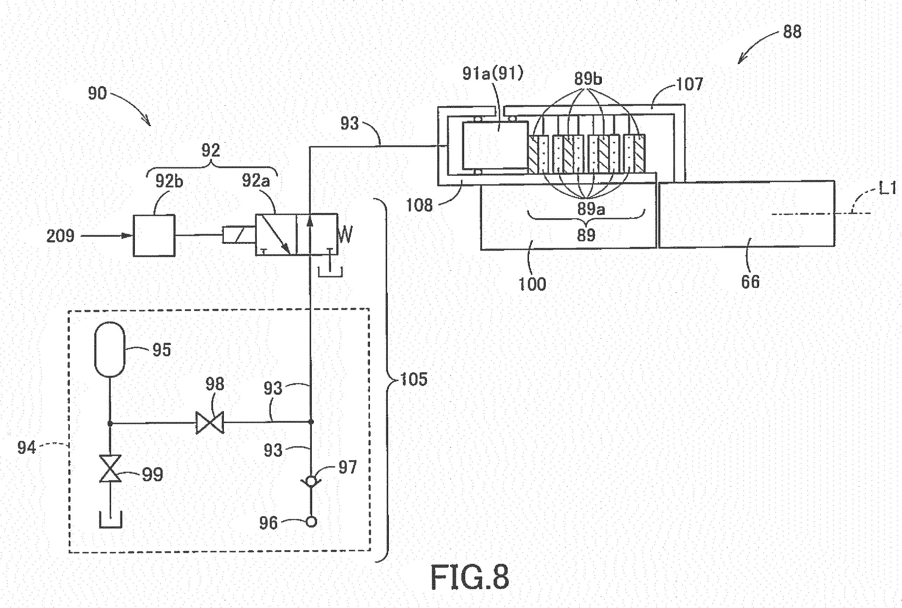

Fig. 8 is a diagram showing an example of the functional configuration of the clutch mechanism 88 (the clutch operating parts 89 and the clutch control unit 90).

The clutch operating parts 89 in this example include a plurality of first friction plates 89a attached to the drive shaft 66 via a first connection member 107 and a plurality of second friction plates 89b attached to the output shaft 100 via a second connection member 108. The first friction plates 89a, the first connection member 107 and the drive shaft 66 are fixed together so as to integrally rotate around the central axis L1. Similarly, the second friction plates 89b, the second connection member 108 and the output shaft 100 are fixed together so as to integrally rotate around the central axis L1. Therefore, when the first friction plates 89a and the second friction plates 89b are engaged with each other by friction or the like and integrally rotate around the central axis L1, the drive shaft 66, the first connection member 107, the second connection member 108 and the output shaft 100 also integrally rotate around the central axis L1.

Incidentally, the first connection member 107 and the second connection member 108 may be configured in any manner as long as the first connection member 107 and the second connection member 108 are respectively capable of properly supporting the first friction plates 89a and the second friction plates 89b. Each of the first and second connection members 107 and 108 may be formed of either a single member or a combination of a plurality of members. For example, the first connection member 107 in the example shown in Fig. 5 is formed of a member that spline-couples with the drive shaft 66 while also spline-coupling with each of the first friction plates 89a. Also, the second connection member 108 is formed of a member that spline-couples with the output shaft 100 while also spline-coupling with each of the second friction plates 89b. Each first friction plate 89a is configured to be slightly movable in the axial direction within a range in which the coupling with the first connection member 107 is maintained. Each second friction plate 89b is configured to be slightly movable in the axial direction within a range in which the coupling with the second connection member 108 is maintained.

As shown in Fig. 8, the clutch control unit 90 causes the first friction plates 89a and the second friction plates 89b to be engaged with each other (in this example, to be fixed to each other by friction), so that the transmission of the rotary power from the drive shaft 66 to the output shaft 100 is implemented, and releases the engagement between the first friction plates 89a and the second friction plates 89b, so that the non-transmission of the rotary power from the drive shaft 66 to the output shaft 100 is implemented.

The clutch control unit 90 in this example includes the hydraulic piston 91a that works as the clutch driver 91, and the hydraulic piston 91a is in contact with at least any one of a first friction plate 89a and a second friction plate 89b (in this example, with a second friction plate 89b). To the hydraulic piston 91a, the clutch hydraulic source 94 is connected via the hydraulic supply line 93. The hydraulic piston 91a has the piston-cylinder structure and is capable of changing the pressing force of the second friction plates 89b against the first friction plates 89a according to the pressure of the liquid transmission medium in the hydraulic supply line 93 under the control of the clutch switching unit 92. Specifically, the hydraulic piston 91a is positioned at either a "position for pressing the second friction plates 89b against the first friction plates 89a so as to set the first friction plates 89a and the second friction plates 89b in the engaged state" or a "position for not pressing the second friction plates 89b against the first friction plates 89a so as to set the first friction plates 89a and the second friction plates 89b in the disengaged state" under the control of the clutch switching unit 92. In the example shown in Fig. 5, the first friction plates 89a and the second friction plates 89b are arranged between the hydraulic piston 91a and a member that is placed in a fixed manner in the axial direction and is closer to the motor M than the hydraulic piston 91a. The switching between the engaged state and the disengaged state of the first friction plates 89a and the second friction plates 89b is made depending on the axial direction position of the hydraulic piston 91a.

Incidentally, the piston-cylinder structure using the hydraulic piston 91a is not particularly limited. In the example of Fig. 5, for instance, the hydraulic piston 91a is arranged in a space demarcated by the first connection member 107, the second connection member 108 and the clutch operating parts 89, and the movement of the hydraulic piston 91a in the axial direction is guided by the first connection member 107 and the second connection member 108. A sealing member such as an O-ring is arranged between the hydraulic piston 91a and the second connection member 108. A space demarcated by the hydraulic piston 91a and the second connection member 108, into which the liquid transmission medium in the hydraulic supply line 93 flows, has liquid-tight structure, preventing the leakage of the liquid transmission medium from the space to the outside. Thus, when the pressure of the liquid transmission medium in the hydraulic supply line 93 is relatively high, the hydraulic piston 91a is pressed by the liquid transmission medium towards the clutch operating parts 89 and presses the second friction plates 89b against the first friction plates 89a. In contrast, when the pressure of the liquid transmission medium in the hydraulic supply line 93 is relatively low, the hydraulic piston 91a moves in a direction such that the hydraulic piston 91a moves away from the clutch operating parts 89, and thus the second friction plates 89b are not pressed against the first friction plates 89a by the hydraulic piston 91a.

Such movement of the hydraulic piston 91a is controlled by the clutch switching unit 92. Specifically, the movement of the hydraulic piston 91a in the axial direction is controlled by the clutch switching unit 92 via the liquid transmission medium in the hydraulic supply line 93, in such a manner that the engagement and disengagement between the first friction plates 89a and the second friction plates 89b are switched. More specifically, as shown in Fig. 8, the clutch switching unit 92 includes: a pressure regulating valve 92a formed of an electromagnetic valve and arranged in the hydraulic supply line 93 between the hydraulic piston 91a and the clutch hydraulic source 94; and an energization controller 92b connected to the sensor device 209 and controlling the excitation (energization) and deexcitation (non-energization) of the pressure regulating valve 92a.

The pressure regulating valve 92a regulates the pressure of the liquid transmission medium on the hydraulic piston 91a. Specifically, the pressure regulating valve 92a switches the valve state to either a "state of allowing for circulation of the liquid transmission medium in the hydraulic supply line 93 while maintaining the hermetic state of the hydraulic supply line 93 (valve open state)" or a "state of releasing the pressure of the liquid transmission medium in the hydraulic supply line 93 by releasing part of the liquid transmission medium in the hydraulic supply line 93 to an external drain (pressure release state)." In the example shown in Fig. 8, the pressure regulating valve 92a in the deexcitation state is set in the valve open state and the pressure regulating valve 92a in the excitation state is set in the pressure release state.

The energization controller 92b controls the excitation/deexcitation state of the pressure regulating valve 92a based on the detection signal from the sensor device 209. For example, when the detection signal from the sensor device 209 indicates that "the force acting on the fastening bolt 208 is less than or equal to prescribed magnitude," the energization controller 92b does not energize the pressure regulating valve 92a and thereby sets the pressure regulating valve 92a in the deexcitation state and the valve open state. In contrast, when the detection signal from the sensor device 209 indicates that "the force acting on the fastening bolt 208 is greater than the prescribed magnitude," the energization controller 92b energizes the pressure regulating valve 92a by applying voltage to the pressure regulating valve 92a to set the pressure regulating valve 92a in the excitation state and the pressure release state.

Therefore, as long as there is no abnormality in particular and "the force acting on the fastening bolt 208 is less than or equal to the prescribed magnitude," the pressure regulating valve 92a is set in the valve open state, the liquid transmission medium in the hydraulic supply line 93 presses the hydraulic piston 91a, and the second friction plates 89b are pressed against the first friction plates 89a and engage with the first friction plates 89a. In this case, the drive shaft 66 and the output shaft 100 are coupled to each other by the engagement of the first friction plates 89a and the second friction plates 89b, and the rotary power of the drive shaft 66 is transmitted to the output shaft 100 via the first connection member 107, the first friction plates 89a, the second friction plates 89b and the second connection member 108.

In contrast, when excessive force works on the wind turbine drive device 1A and "the force acting on the fastening bolt 208 is greater than the prescribed magnitude," the pressure regulating valve 92a is set in the pressure release state, the pressure of the liquid transmission medium in the hydraulic supply line 93 on the hydraulic piston 91a is released, and the engagement of the first friction plates 89a and the second friction plates 89b is released. Accordingly, the drive shaft 66 and the output shaft 100 are set in the decoupled state, in such a manner that breakage of the pinion 101 attached to the output shaft 100 and the ring gear 202 engaged with the pinion 101 can be prevented.

Incidentally, the clutch hydraulic source 94 in this embodiment includes an accumulator 95, a supply port 96 capable of supplying the liquid transmission medium to the hydraulic supply line 93, and a check valve 97 provided between the supply port 96 and the accumulator 95. The accumulator 95 is connected to the hydraulic supply line 93 via a relief value 98 and is also connected to a drain value 99. The check valve 97 prevents the liquid transmission medium in the hydraulic supply line 93 from flowing out from the supply port 96.

Since the clutch hydraulic source 94 in this example includes the accumulator 95 as above, the configuration can be simplified compared to a hydraulic source employing a pump or the like. Further, even when the pressure regulating valve 92a is set in the pressure release state and the drive shaft 66 and the output shaft 100 shift to the decoupled state, it is possible to make the first friction plates 89a and the second friction plates 89b engage with each other again to return the drive shaft 66 and the output shaft 100 to the coupled state by returning the pressure regulating value 92a to the value open state and supplying new liquid transmission medium to the hydraulic supply line 93 via the supply port 96.

### [Modifications]

The present invention is not limited to the embodiment described above and may be modified in various ways.

For example, the specific configuration and arrangement of "the clutch mechanism 88 (the clutch operating parts 89 and the clutch control unit 90)" for carrying out the switching between transmission and non-transmission of the rotary power from the drive shaft 66 to the output shaft 100 are not particularly limited. While the clutch operating parts 89 (the first friction plates 89a and the second friction plates 89b) are arranged at positions apart from the central axis L1 in the above example, the clutch operating parts 89 may also be arranged on the central axis L1, for example. In this case, the clutch operating parts 89 (friction plates, etc.) may be arranged respectively on an "end face of the drive shaft 66 on the output shaft 100 side" and an "end face of the output shaft 100 on the drive shaft 66 side."

In such cases, when the detection signal from the sensor device 209 indicates that "the force acting on the fastening bolt 208 is less than or equal to the prescribed magnitude," relative position of the drive shaft 66 and the output shaft 100 is controlled by the clutch control unit 90 in such a manner that "the clutch operating part 89 on the end face of the drive shaft 66 on the output shaft 100 side" and "the clutch operating part 89 on the end face of the output shaft 100 on the drive shaft 66 side" engage with each other. As a result, the rotary power of the drive shaft 66 is transmitted to the output shaft 100 via the clutch operating parts 89. In contrast, when the detection signal from the sensor device 209 indicates that "the force acting on the fastening bolt 208 is greater than the prescribed magnitude," the relative position of the drive shaft 66 and the output shaft 100 is controlled by the clutch control unit 90 in such a manner that "the clutch operating part 89 on the end face of the drive shaft 66 on the output shaft 100 side" and "the clutch operating part 89 on the end face of the output shaft 100 on the drive shaft 66 side" are separated from each other and thus the engagement is released. As a result, the transmission of the rotary power of the drive shaft 66 to the output shaft 100 can be interrupted.

While part of the clutch mechanism 88, including the clutch switching unit 92 and the clutch hydraulic source 94, is provided outside the case 10 in the above example, each part, such as these components, constituting the clutch mechanism 88 (the clutch operating parts 89 and the clutch control unit 90) may also be provided inside the case 10. Thus, part or all of the components constituting the clutch mechanism 88 may be arranged inside the drive shaft 66 and/or the output shaft 100, for example.

While an example in which the sensor device 209 for detecting the abnormal state measures a change in the condition of a fastening bolt (fastening member) 208 used for the installation of the wind turbine drive device 1A and the clutch control unit 90 controls the clutch operating parts 89 based on the result of the detection by the sensor device 209 is described above, the present invention is not limited to this example. For example, the sensor device 209 may be provided to measure torque of the drive shaft 66 and/or the output shaft 100, to measure distortion of the case 10, to measure an electric current value of the motor, or to detect abnormality in a braking operation for braking the movement of the movable part of the wind turbine.

While the clutch hydraulic source 94 is formed by using the accumulator 95 in the above example, the clutch hydraulic source 94 may also be formed by using a hydraulic pump or the like.

While the present invention is applied to a wind turbine drive device 1A having a speed reduction unit 30 of the eccentric oscillation type in the above example, the present invention may be applied to a wind turbine drive device 1A having a speed reduction unit of a different type. For example, a speed reduction unit of a different type, such as the planetary gear type, may be provided instead of the speed reduction unit 30 of the eccentric oscillation type, and the present invention can be applied to a wind turbine drive device 1A in which rotary power is transmitted from the power shaft 35 of the motor M to the different type of speed reduction unit and the rotary power with reduced speed and increased torque is transmitted from the different type of speed reduction unit to the drive shaft 66. It is also possible to provide a speed reduction unit of a different type, such as the planetary gear type, in addition to the above-described speed reduction unit 30 of the eccentric oscillation type. For example, the present invention is applicable also to a wind turbine drive device 1A in which rotary power is transmitted from the power shaft 35 of the motor M to the speed reduction unit of the different type and the rotary power with reduced speed and increased torque is transmitted from the speed reduction unit of the different type to the speed reduction unit 30 of the eccentric oscillation type via the input gear 20. Even in these cases, failure such as breakage of a component can be prevented by making the switching between transmission and non-transmission of the rotary power from the drive shaft 66 to the output shaft 100 by use of the clutch mechanism 88.

The present invention is not limited to the individual embodiments described above but contains a variety of modifications which can be conceived by those skilled in the art, and effects of the present invention are also not limited to those described above. Various additions, changes and partial deletions are possible within the range not departing from the conceptual idea and content of the present invention derived from the contents specified in the claims and equivalents thereof.

## Claims

1. A wind turbine drive device (1A) comprising:
a motor (M) having a power shaft (35);
an input gear (20) that receives motive power transmitted from the power shaft (35) and is rotated by the motive power;
a speed reduction unit (30) having a drive shaft (66) rotated by the motive power inputted via the input gear (20);
an output shaft (100) rotated by rotary power transmitted from the drive shaft (66); and
a clutch mechanism (88) that makes switching between transmission and non-transmission of the rotary power from the drive shaft (66) to the output shaft (100).

2. The wind turbine drive device (1A) according to claim 1, wherein the clutch mechanism (88) includes:
a clutch operating part (89) provided between the drive shaft (66) and the output shaft (100); and
a clutch control unit (90) that controls the clutch operating part (89).

3. The wind turbine drive device (1A) according to claim 2, wherein:
the clutch operating part (89) includes: a first friction plate (89a) attached to the drive shaft (66); and a second friction plate (89b) attached to the output shaft (100), and
the clutch control unit (90) causes the first friction plate (89a) and the second friction plate (89b) to engage with each other to implement the transmission of the rotary power from the drive shaft (66) to the output shaft (100), and releases engagement between the first friction plate (89a) and the second friction plate (89b) to implement the non-transmission of the rotary power from the drive shaft (66) to the output shaft (100).

4. The wind turbine drive device (1A) according to claim 3, wherein the clutch control unit (90) includes:
a clutch driver (91) being to be placed in contact with at least one of the first friction plate (89a) and the second friction plate (89b); and
a clutch switching unit (92) that controls movement of the clutch driver (91) to make switching between engagement and disengagement of the first friction plate (89a) and the second friction plate (89b).

5. The wind turbine drive device (1A) according to claim 4, wherein:
the clutch driver (91) includes a hydraulic piston (91a), and
the clutch switching unit (92) controls movement of the hydraulic piston (91a) via a liquid transmission medium to make the switching between engagement and disengagement of the first friction plate (89a) and the second friction plate (89b).

6. The wind turbine drive device (1A) according to claim 5, wherein:
the clutch control unit (90) further includes a clutch hydraulic source (94) connected to the clutch driver (91) via a hydraulic supply line (93) filled with the liquid transmission medium, and
the clutch switching unit (92) includes a pressure regulating valve (92a) provided with the hydraulic supply line (93) between the clutch driver (91) and the clutch hydraulic source (94) and regulating pressure of the liquid transmission medium on the clutch driver (91).

7. The wind turbine drive device (1A) according to claim 6, wherein the clutch hydraulic source (94) includes an accumulator (95).

8. The wind turbine drive device (1A) according to claim 7, wherein the clutch hydraulic source (94) further includes:
a supply port (96) capable of supplying the liquid transmission medium to the hydraulic supply line (93); and
a check valve (97) provided between the supply port (96) and the accumulator (95) and preventing the liquid transmission medium in the hydraulic supply line (93) from flowing out from the supply port (96).

9. The wind turbine drive device (1A) according to any one of claims 1 to 8, wherein the speed reduction unit (30) further includes:
a case (10) having internal teeth (12) that are provided on an inner circumference side;
an external gear (40) having external teeth (41) engaging with the internal teeth (12);
a crank shaft (50) oscillating the external gear (40) according to rotation of the input gear (20); and
a carrier (60) that rotates according to oscillation of the external gear (40) and is connected to the drive shaft (66).

10. A reduction gear (1) comprising:
an input gear (20) that receives motive power transmitted from a power shaft (35) and is rotated by the motive power;
a case (10) having internal teeth (12) that are provided on an inner circumferential side;
an external gear (40) having external teeth (41) engaging with the internal teeth (12);
a crank shaft (50) oscillating the external gear (40) according to rotation of the input gear (20);
a carrier (60) rotating according to oscillation of the external gear (40);
a drive shaft (66) connected to the carrier (60) and rotating according to rotation of the carrier (60);
an output shaft (100) rotated by rotary power transmitted from the drive shaft (66); and
a clutch mechanism (88) that makes switching between transmission and non-transmission of the rotary power from the drive shaft (66) to the output shaft (100).
